Europäisches Patentamt

European Patent Office

Office européen des brevets

(11) Publication number:

**0 395 920**
**A2**

# (12) EUROPEAN PATENT APPLICATION

(21) Application number: **90106898.1**

(22) Date of filing: **10.04.90**

(51) Int. Cl.⁵: **G21C 3/326**

(30) Priority: **01.05.89 US 345859**

(43) Date of publication of application:
**07.11.90 Bulletin 90/45**

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Bly, Charles Albert**
**908 William Penn Ct.**
**Pittsburgh, Pennsylvania 15221(US)**

(74) Representative: **Gallo, Wolfgang, Dipl.-Ing. (FH) et al**
**Patentanwälte Dipl.-Ing. L. Fleuchaus**
**Dipl.-Phys. H. Schroeter Dipl.-Ing K.**
**Lehmann, Dipl.-Ing.W. Wehser Dipl.-Ing. R.**
**Holzer, Dipl.-Ing.(FH) W. Gallo Ludwigstrasse**
**26**
**D-8900 Augsburg(DE)**

(54) Nuclear fuel with burnable absorber coating.

(57) A burnable absorber coated nuclear fuel comprising a nuclear fuel substrate (44) of fissionable material, and an outer coating (46) applied on the substrate and composed of a burnable absorber having helium release reducing properties.

FIG. 7

## NUCLEAR FUEL WTH BURNABLE ABSORBER COATING

The present invention relates generally to nuclear fuel rods and, more particularly, to nuclear fuel coated with a burnable absorber.

In a typical nuclear reactor, such as a pressurized water reactor (PWR), the reactor core comprises a large number of fuel assemblies each of which includes a plurality of elongate fuel elements or rods containing fissile material in the form of nuclear fuel pellets stacked upon one another. The fuel rods are grouped together in an array organized to provide sufficient neutron flux in the core to support a high rate of nuclear fission and, thus, the release of a large amount of energy in the form of heat, liquid coolant being pumped upward through the core in order to extract some of the heat for the production of useful work.

In the operation of a PWR, it is desirable to prolong the life of the reactor core as long as feasible in order to better utilize the uranium fuel and thereby reduce fuel costs. To attain this objective, it is common practice to initially load into the reactor core an excess of reactivity and, at the same time, make provision for the reactivity to be maintained relatively constant throughout core life. One way of doing this is to use a burnable absorber material which has a high neutron-absorption cross-section to absorb excess neutrons during the initial period of operation and then will undergo a transformation which results in a lowering of its neutron-absorption cross-section without, however, substantially affecting the reactivity of the fuel during the later period of operation when neutron availability is less. Thus, the burnable absorber or poison compensates for the excessive neutron production of the fuel occurring during the early period of operation but progressively burns up and captures less neutrons during the later period of operation, thereby extending the life of the fuel and maintaining the reactivity relatively constant over its lifetime.

As known in the art, a burnable absorber can be mixed directly with the fissionable material of the fuel pellets and integrated therewith, or it can be applied to the surface of fuel pellets as a coating. For example, U.S. Patent 3,427,222, assigned to the assignee of the present invention, describes fuel pellets having a fusion-bonded coating of burnable absorber on their surfaces, each fuel pellet consisting of a cylindrical body made of sintered particles of fissionable material, such as enriched uranium oxide, and an outer coating of predetermined thickness containing a burnable absorber or poison material, such as boron, cadmium, gadolinium, samarium or europium. Examples of boron-containing compounds used are boron carbide, boron nitride, and zirconium boride or zirconium diboride. These known techniques have been successfully applied in connection with integral fuel burnable absorber (IFBA) rods manufactured and marketed by the assignee of the present invention and used in PWR fuel assemblies known commercially as VANTAGE 5.

Zirconium diboride has been found to be a particularly attractive material for application as a burnable absorber or poison coating on nuclear fuel pellets. However, the inventor herein has recognized a potential problem arising from excessive quantities of helium produced as this particular kind of burnable absorber is burned up. About fifty percent of the helium generated is retained by the coating; however, the remaining fifty percent is released in the fuel rod and causes pressure within the plenum thereof to build up. In the event of a power transient, such pressure buildup may result in gas expansion causing radial outward swelling of the fuel rod's cladding tube and, consequently, a decrease or even blockage of coolant flow between fuel rods.

Therefore, although zirconium diboride used as a burnable absorber coating on fuel pellets can contribute toward a longer fuel life and, hence, toward extended fuel-rod use, it can also work to limit the useful life of a fuel rod by causing swelling.

It is the principal object of the invention to alleviate this potential problem, and the invention accordingly resides in a burnable absorber coated nuclear fuel comprising a nuclear fuel substrate containing fissionable material, and an outer coating of burnable absorber applied on said substrate, characterized in that said outer coating is composed of a burnable absorber having helium release-reducing properties.

Generally, suitable burnable absorbers with helium release-reducing properties are materials which have a satisfactory neutron absorption cross-section but do not produce helium or, if they do, are sufficiently dense to trap the helium atoms in the coating and thereby prevent or reduce their release. More particularly, the outer coating according to the invention may be manganese diboride or erbium boride or metallic erbium or a sputtered mixture of erbium oxide and zirconium diboride or a layered coating composed of an inner layer of zirconium diboride and an outer layer of erbium oxide.

In order that the features and advantages of the invention may become more readily apparent, preferred embodiments thereof will now be described, by way of example only, with reference to the accompanying drawings, in which:-

Figure 1 is an elevational view, partly in section, which shows a conventional nuclear fuel assembly in vertically foreshortened form and with parts broken away for clarity;

Figure 2 is an enlarged longitudinal sectional view of a conventional fuel rod shown in vertically foreshortened form;

Figure 3 is an enlarged cross-sectional view of a conventional uncoated fuel pellet such as employed in the fuel rod of Figure 2;

Figure 4 is a longitudinal sectional view taken along line 4--4 of Figure 3;

Figure 5 is an enlarged cross-sectional view of a conventional fuel pellet coated with a burnable absorber, such as also utilized in the fuel rod shown in Figure 2;

Figure 6 is a longitudinal sectional view taken along line 6--6 of Figure 5;

Figure 7 is an axial sectional view of a fuel pellet coated with a burnable absorber in accordance with a first embodiment of the invention;

Figure 8 is an axial sectional view of a coated fuel pellet representing a second embodiment of the invention.

Figure 9 is an axial sectional view of a coated fuel pellet representing a third embodiment of the invention; and

Figure 10 is an axial sectional view of a coated fuel pellet representing a fourth embodiment of the invention.

In the following description, like references characters designate like or corresponding parts throughout the several views, and terms such as "forward", "rearward", "left", "right", "upward", "downward" and the like are used as words of convenience not to be construed as limiting terms.

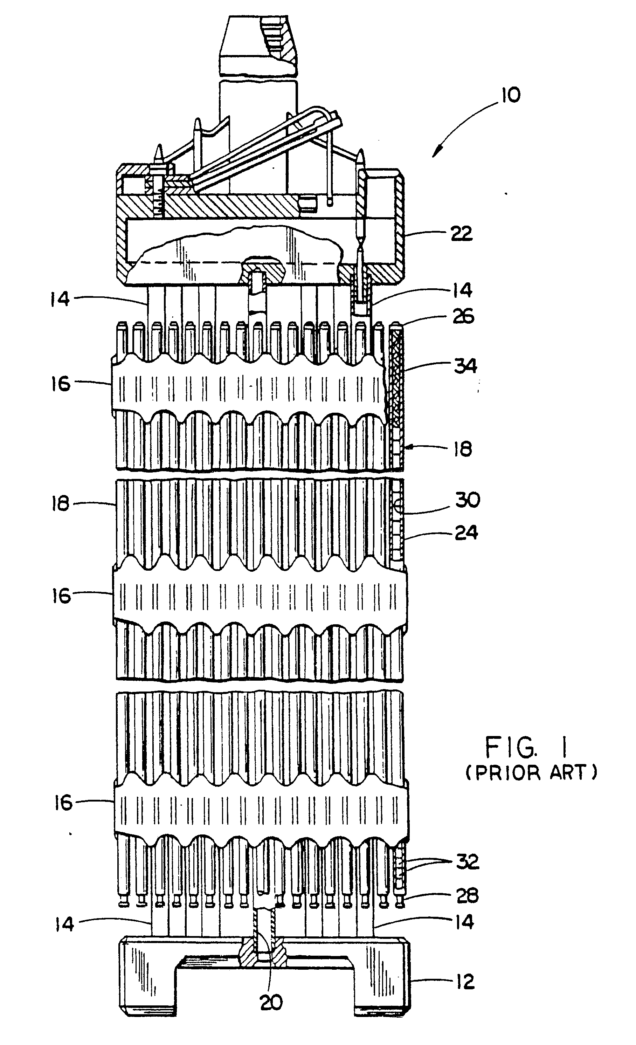

Referring now to the drawings, and particularly to Figure 1 thereof, the fuel assembly illustrated therein and generally designated with reference numeral 10 is the type used in a pressurized water reactor (PWR). Basically, it comprises a lower end structure or bottom nozzle 12 for supporting the fuel assembly on the lower core plate (not shown) in the core region of a nuclear reactor (not shown), guide tubes or thimbles 14 longitudinally extending upward from the bottom nozzle 12, transverse grids 16 axially spaced along the guide thimbles 14, an organized array of elongate fuel rods 18 transversely spaced and supported by the grids 16, an instrumentation tube 20 located in the center of the fuel assembly, and an upper end structure or top nozzle 22 attached to the upper ends of the guide thimbles 14. With such an arrangement of parts, the fuel assembly 10 forms an integral unit capable of being conveniently handled without damage to its component parts.

Each of the fuel rods 18 includes a cladding tube 24 sealed at its opposite ends by means of end plugs 26 and 28 and defining a sealed chamber 30, and it contains nuclear fuel pellets 32 stacked end-to-end within the chamber 30 and biased against the bottom end plug 28 by means of a spring 34 interposed between the stack of fuel pellets and the top end plug 26.

The conventional fuel rod 18 illustrated in Figure 2 is of the integral fuel-burnable-absorber (IFBA) type mentioned hereinbefore, some of its fuel pellets containing a burnable absorber or poison material. More particularly, and as indicated in Figure 2, the stack of fuel pellets in the fuel rod 18 consists of upper and lower "strings" of fuel pellets 32A with no poison material, and an intermediate "string" of fuel pellets 32B with poison material.

As seen from Figs. 3 and 4, each fuel pellet 32A without a burnable absorber has the shape of a solid right cylindrical body composed of fissionable material, such as enriched uranium dioxide. As seen from Figs. 5 and 6, each fuel pellet 32B with a burnable absorber consists of a solid right cylindrical body 36B composed of fissionable material, such as enriched uranium dioxide, and a thin cylindrical continuous coating 38 disposed on the outer surface 40 of the body 36B, the coating 38 preferably being zirconium diboride ($ZrB_2$) in which the boron-10 isotope is an effective neutron absorber. Alternatively, the coated fuel pellets 32B could be composed of a burnable absorber or poison material, such as gadolinia, mixed integrally with the enriched uranium fuel. In zirconium diboride, the zirconium provides the cohesive matrix for holding the boron together to prevent fragmentation of the coating from occurring as the burnable absorber is burned up.

As explained earlier herein, one problem with using zirconium diboride is the buildup of helium gas pressure within the plenum or sealed chamber 30 of a conventional fuel rod. The invention proposes to modify the poison coated fuel pellets in an IFBA rod in a manner such as to reduce the release of helium by the burnable absorber material incorporated in the fuel pellets, thereby to avoid the above-mentioned drawback of conventional burnable absorber coated fuel while retaining the benefits of the IFBA-rod approach to controlling reactivity.

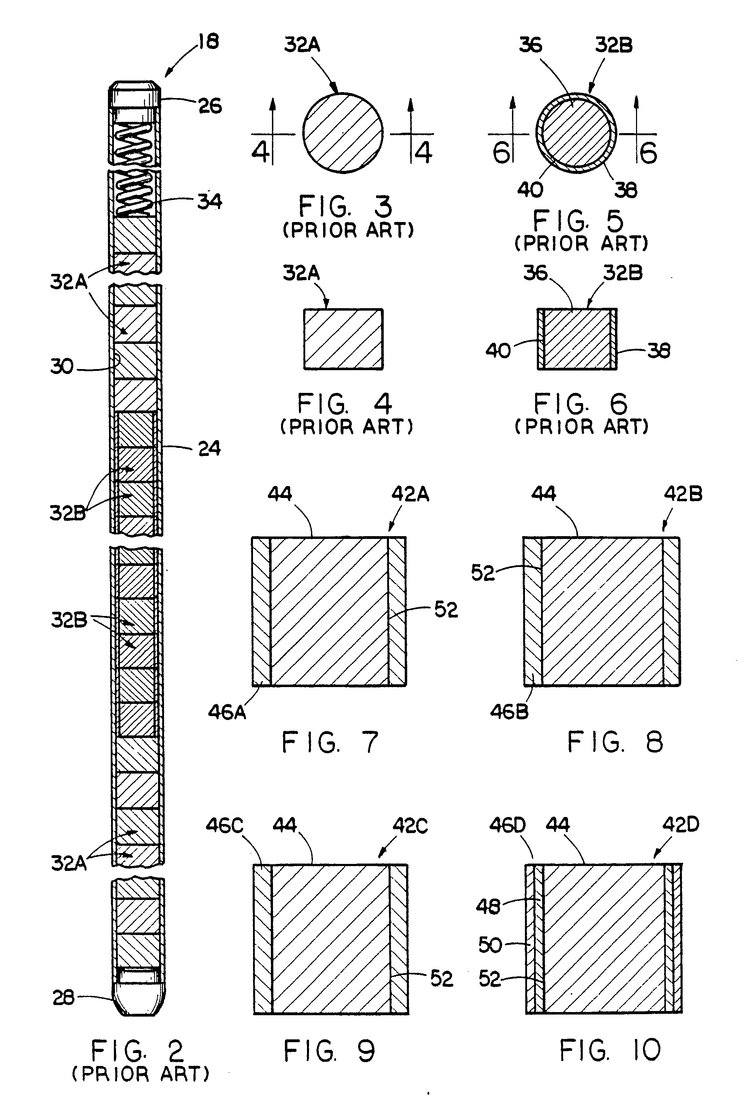

Turning now to Figs. 7-10 showing several embodiments the invention, it is seen therefrom that the burnable absorber coated fuel 42A, B, C or D in each embodiment consists of a nuclear fuel substrate 44 containing a fissionable material, and an outer coating 46 of helium release-reducing burnable absorber material applied to the substrate.

Suitable burnable absorber materials with helium release-reducing properties are those which are sufficiently dense to trap the helium atoms in the coating so as to prevent or reduce their release into the fuel rod plenum. Also, suitable materials would be those which have satisfactory neutron absorption cross-sections but do not produce helium. In the embodiment shown in Figure 7, the fuel 42A has an outer coating 46A of manganese diboride, the advantage of which is that its density is approximately 167% of the density of zirconium diboride. In the second, third, and fourth embodiments, the outer coating 46B-D of the fuel 42B-D is erbium oxide or boride which are suitable either as a supplement to zirconium diboride or as replacement therefor since they do not produce helium yet have an acceptable neutron absorption cross section and a melting temperature which allows them to be applied by sputtering techniques. More particularly, in the embodiment shown in Figure 8, the outer coating 46B is a sputtered mixture of erbium oxide and zirconium diboride. In the embodiment shown in Figure 9, the outer coating 46C is erbium boride used by itself and as a substitute for the zirconium diboride. Alternatively, the outer coating 46C could be metallic erbium sputtered over the fuel substrate 44. In the embodiment shown in Figure 10, the outer coating 46D is layered, being composed of an inner layer 48 of zirconium diboride and an outer layer 50 of erbium oxide. It should be noted that the manganese and erbium used in the coatings according to the invention are advantageous insofar as they provide the cohesive matrix for holding the boron together in the coating.

The fuel substrate 44 preferably is a cylindrical body of uranium dioxide which has the outer coating 46 applied to a continuous circumferential surface 52 thereof, suitable methods of applying such coatings being described in the above-mentioned U.S. Patent 3,427,222, for example.

## Claims

1. A burnable absorber coated nuclear fuel comprising a nuclear fuel substrate (44) of fissionable material, and an outer coating (46) of burnable absorber applied on said substrate, characterized in that said outer coating (46) is composed of a burnable absorber having helium release-reducing properties.

2. A burnable absorber coated nuclear, fuel according to claim 1, characterized in that said outer coating (46A) is manganese diboride.

3. A burnable absorber coated nuclear fuel according to claim 1, characterized in that said outer coating (46B) is a sputtered mixture of erbium oxide and zirconium diboride.

4. A burnable absorber coated nuclear fuel according to claim 1, characterized in that said outer coating (46C) is erbium boride.

5. A burnable absorber coated nuclear fuel according to claim 1, characterized in that said outer coating (46C) is metallic erbium.

6. A burnable absorber coated nuclear fuel according to claim 1, characterized in that said outer coating (46D) is a layered coating composes of an inner layer (48) of zirconium diboride and an outer layer (50) of erbium oxide.

7. A burnable absorber coated nuclear fuel according to any one of the preceding claims, characterized in that said fissionable material is enriched uranium dioxide.

8. A burnable absorber coated nuclear fuel according to any one of the preceding claims, characterized in that said fuel substrate (44) has the form of a cylindrical body made of said fissionable material and having a continuous cylindrical outer surface (52), said coating (46) of helium release-reducing burnable absorber being applied on said continuous cylindrical outer surface (52) of said body.

FIG. 1
(PRIOR ART)

FIG. 2
(PRIOR ART)

FIG. 3
(PRIOR ART)

FIG. 4
(PRIOR ART)

FIG. 5
(PRIOR ART)

FIG. 6
(PRIOR ART)

FIG. 7

FIG. 8

FIG. 9

FIG. 10